# EUROPEAN PATENT APPLICATION

(11) **EP 4 467 594 A1**
(43) Date of publication of application: **27.11.2024**
(21) Application number: 24165716.2
(22) Date of filing: 22.03.2024
(51) Int. Cl.: C08J 5/24, B29C 65/02, B29C 65/48, B29C 65/50, B29C 65/00

(54) **CO-CURABLE AND CO-CURED UV/VISIBLE LIGHT-RESISTANT PEEL PLY APPLICATION FOR COMPOSITE MATERIAL ASSEMBLIES**

(30) Priority: 22.05.2023 US 202363468070 P; 06.11.2023 US 202318502387
(71) Applicant: The Boeing Company, Arlington, VA 22202 (US)
(72) Inventor: LAM, Benjamin Zhang, Arlington, 22202 (US); MILLER, Melinda Dae, Arlington, 22202 (US); OSBORNE, John Christopher, Arlington, 22202 (US); WITHROW, Bryan Joseph, Arlington, 22202 (US); GRINDON, Jason Russell, Arlington, 22202 (US); BOLLES, Jason Alan, Arlington, 22202 (US); ACKERMAN, Patrice Kathryn, Alrington, 22202 (US); AUBIN, John Raymond, Arlington, 22202 (US); BRAUN, Kevin Lee, Arlington, 22202 (US)
(74) Representative: Bryn-Jacobsen, Caelia

(57) **Abstract**

Co-curable and co-cured UV/visible light-resistant composite material assembly precursors used to make composite material assemblies comprise a compatible co-curable and co-cured peel ply protective layer to impart selected surface characteristics to the co-curable and co-cured composite material assembly precursor prior to peel ply removal and composite material precursor incorporation into a larger assembly are disclosed.

## Description

### RELATED APPLICATIONS

This application claims priority to U.S. Provisional Patent Application Serial No. 63/468,070 filed on May 22, 2023.

### TECHNOLOGICAL FIELD

The present disclosure relates generally to the field of composite materials, and composite materials used for manufacturing large structural components and assemblies. More specifically, the present disclosure relates to the field of co-curable and co-cured composite materials used for structural materials for large structural aircraft components and assemblies.

### BACKGROUND

The use of composite materials in the manufacture of various structural component parts continues to increase. At least due to the strength-to-weight ratios, composite materials offer advantages as replacements for denser materials, such as, for example, metals, metal alloys, etc., where the overall weight of a completed structure (or the weight of a component part of a completed structure) is an important consideration in the selection of materials used in the manufacture of such a completed structure, or in the manufacture of a component of a completed structure.

Coating layers typically applied to composite materials are not as durable as, or have the longevity of, the composite materials to which such coating layers are applied. Composite material assemblies may otherwise comprise external or internal layers that can include, for example, protective coatings or other coating layers.

Unless explicitly identified as such, no statement herein is admitted as prior art merely by its inclusion in the Technological Field and/or Background section.

### SUMMARY

Presently disclosed apparatuses, systems, and method are directed to the surface modification of co-curable and co-cured composite material precursors comprising a UV/visible light-resistant layer and imparting an increased surface energy and increased secondary bonding at the composite material precursor surface interface using a removable and co-curable and co-cured peel ply layer that is compatible with a UV/visible light-resistant layer in a composite material precursor.

Present aspects are directed to a first co-curable composite material assembly precursor comprising a co-curable composite material stack, with the co-curable composite material stack comprising a co-curable composite material substrate, and a co-curable UV/visible light-resistant layer, with the first co-curable UV/visible light-resistant layer positioned adjacent the co-curable composite material substrate, and with the co-curable UV/visible light-resistant layer comprising a first co-curable UV/visible light-resistant resin, with the co-curable UV/visible light-resistant layer further comprising at least one of fiberglass fibers, carbon fibers, polyester fibers, aramid fibers, boron fibers, quartz, and combinations thereof. The co-curable composite material assembly precursor further includes a co-curable peel ply fiber-and-resin-containing layer positioned adjacent the UV/visible light-resistant layer, with the co-curable peel ply fiber and resin-containing layer comprising at least one of fiberglass fibers, carbon fibers, polyester fibers, aramid fibers, boron fibers, and combinations thereof, and with the co-curable peel ply fiber-and-resin-containing layer further comprising a second co-curable UV/visible light-resistant resin compatible with the co-curable UV/visible light-resistant layer.

In another aspect the first co-curable UV/visible light-resistant resin is the same as the second co-curable UV/visible light-resistant resin.

In another aspect the first co-curable UV/visible light-resistant resin is not the same as the second co-curable UV/visible light-resistant resin.

In another aspect the first co-curable UV/visible light-resistant resin is compatible with the second co-curable UV/visible light-resistant resin.

In another aspect, co-curable composite material substrate is co-curable with the co-curable UV/visible light-resistant layer and is further co-curable with the co-curable peel ply fiber-and-resin-containing layer at a temperature ranging from about 250°F to about 410°F.

In a further aspect, the co-curable composite material substrate comprises a carbon fiber reinforced polymer.

In another aspect, the co-curable composite material substrate comprises an epoxy resin-based compound and the co-curable composite material substrate further comprises at least one of carbon fibers, boron fibers, aramid fibers, fiberglass fibers, polyester fibers, and combinations thereof.

In another aspect, the co-curable composite material substrate comprises a plurality of carbon fiber reinforced polymer prepregs.

In another aspect, the co-curable composite material substrate is in direct contact with the co-curable UV/visible light-resistant layer.

In a further aspect, the co-curable UV/visible light-resistant layer completely covers at least one side of the co-curable composite material substrate.

Aspects of the present disclosure are further directed to a co-cured composite material assembly precursor (the co-cured composite material "stack" with the co-cured peel ply) comprising a co-cured composite material substrate, a co-cured UV/visible light-resistant layer, with the co-cured UV/Visible light-resistant layer positioned adjacent the first composite material substrate, with the co-curable UV/visible light-resistant layer comprising a first co-curable UV/visible light-resistant resin, and with the co-cured UV/visible light-resistant layer further comprising at least one of fiberglass fibers, carbon fibers, polyester fibers, aramid fibers, boron fibers, quartz, and combinations thereof. The co-cured composite material assembly precursor further includes a co-cured peel ply fiber-and-resin-containing layer positioned adjacent the co-cured UV/visible light-resistant layer, and with the co-cured peel ply fiber-and-resin-containing layer further comprising a second co-cured UV/visible light-resistant resin compatible with the co-curable UV/visible light-resistant layer.

In another aspect, the co-cured peel ply fiber and resin-containing layer comprising at least one of fiberglass fibers, carbon fibers, polyester fibers, aramid fibers, boron fibers, and combinations thereof,

In another aspect, the co-cured UV/visible light-resistant layer has a UV/visible light transmittance value ranging from about 0% to about 20% UV/visible light transmittance for UV/visible light wavelengths ranging from about 180 nm to about 800 nm when the co-curable UV/visible light-resistant layer comprises an average thickness ranging from about 2 mils to about 6 mils.

In another aspect, the co-cured composite material substrate is co-cured with the co-curable UV/visible light-resistant layer and is further co-curable with the co-curable peel ply fiber-and-resin-containing layer at a temperature ranging from about 250°F to about 410°F.

In a further aspect, the co-cured composite material substrate comprises an epoxy resin-based compound and the co-cured composite material substrate further comprises at least one of carbon fibers, boron fibers, aramid fibers, fiberglass fibers, polyester fibers, and combinations thereof.

In another aspect, the co-cured composite material substrate is formed from a plurality of carbon fiber reinforced polymer prepregs.

Further present aspects are directed to (the co-curable "stinger/assembly precursor" having the peel ply) a co-curable composite material assembly precursor comprising a co-curable composite material substrate (the stringer), and a co-curable peel ply fiber-and-resin-containing layer positioned adjacent the co-curable composite material substrate, said co-curable peel ply fiber-and-resin-containing layer further comprising a co-curable UV/visible light-resistant resin.

In another aspect, the co-curable composite material substrate comprises a carbon fiber reinforced polymer.

In another aspect, the co-curable composite material substrate comprises an epoxy resin-based compound and the co-curable composite material substrate further comprises at least one of carbon fibers, boron fibers, aramid fibers, fiberglass fibers, polyester fibers, and combinations thereof.

In another aspect, the co-curable composite material substrate comprises a plurality of carbon fiber reinforced polymer prepregs.

Further present aspects are directed to a co-cured aircraft assembly precursor that includes a co-cured ("stringer/assembly precursor") composite material substrate (the stringer), and a co-cured peel ply fiber-and-resin-containing layer positioned adjacent the co-curable composite material substrate, with the co-cured peel ply fiber-and-resin-containing layer further comprising a co-cured UV/visible light-resistant resin.

In another aspect, the co-cured composite material substrate comprises a carbon fiber reinforced polymer.

In another aspect, the co-cured composite material substrate comprises an epoxy resin-based compound and the co-cured composite material substrate further comprises at least one of carbon fibers, boron fibers, aramid fibers, fiberglass fibers, polyester fibers, and combinations thereof.

In a further aspect, the co-cured composite material substrate comprises a plurality of carbon fiber reinforced polymer prepregs.

Another present aspect is directed to a method (for making a co-cured composite material assembly "first" precursor by applying the peel ply to the skin/stack) with the method including providing a first co-curable composite material substrate, applying a co-curable UV/visible light-resistant layer onto the first composite material substrate, said co-curable UV/visible light-resistant layer comprising a first co-curable UV/visible light-resistant resin and at least one of fiberglass fibers, carbon fibers, polyester fibers, aramid fibers, boron fibers, quartz, and combinations thereof. The method further includes applying a co-curable peel ply fiber-and-resin-containing layer positioned adjacent the co-curable UV/visible light-resistant layer to form a co-curable composite material assembly first precursor, with the co-curable peel ply fiber-and-resin-containing layer further comprising a second co-curable UV/visible light-resistant resin compatible with the co-curable UV/visible light-resistant layer, with the co-curable peel ply fiber-and-resin-containing layer further comprising a peel ply backing layer covering the co-curable peel ply fiber-and-resin-containing layer. The method further includes co-curing the co-curable composite material substrate with the co-curable UV/visible light-resistant layer and the co-curable peel ply fiber and-resin-containing layer to form a co-cured composite material assembly first precursor.

In a further aspect, the co-cured UV/visible light-resistant layer in the co-cured composite material assembly first precursor has a UV/visible light transmittance value ranging from about 0% to about 20% UV/visible light transmittance for UV/visible light wavelengths ranging from about 180 nm to about 800 nm when the co-curable UV/visible light-resistant layer comprises an average thickness ranging from about 2 mils to about 6 mils.

In another aspect, the co-curable UV/visible light-resistant layer is applied as a single ply to the co-curable composite material substrate.

In another aspect, the co-curable composite material substrate comprises a carbon fiber reinforced polymer composite material substrate.

In another aspect, the co-curable composite material substrate comprises a fiber reinforced epoxy resin matrix, said fiber reinforced epoxy resin matrix comprising at least one of carbon fibers, boron fibers, aramid fibers, fiberglass fibers, polyester fibers, and combinations thereof.

A further present aspect is directed to a co-cured composite material assembly first precursor made according to a method presented herein.

In another present aspect, a method is presented for making a co-cured composite material assembly second precursor that is configured to be joined to the co-cured composite material assembly first precursor, with the method including providing a co-curable second composite material substrate, applying a co-curable peel ply fiber-and-resin-containing layer positioned adjacent the co-curable second composite material substrate to form a co-curable composite material second precursor, with the co-curable peel ply fiber-and-resin-containing layer further comprising a co-curable UV/visible light-resistant resin compatible with the co-curable UV/visible light-resistant layer in a co-cured state, and with the co-curable peel ply fiber and-resin-containing layer further comprising a peel ply backing layer covering the co-curable peel ply fiber-and-resin-containing layer. The method further includes co-curing the co-curable second composite material substrate with the co-curable peel ply fiber-and-resin-containing layer to form a co-cured composite material assembly second precursor.

Further present aspects are directed to a co-cured second composite material assembly precursor made according to the method disclosed herein.

In another aspect, a method for making a co-cured composite material assembly second precursor that is configured to be joined to the co-cured composite material assembly first precursor further includes removing the peel ply backing layer from the co-cured composite material assembly first precursor to form a co-cured composite material assembly first precursor UV/visible light resistant resin layer exposed surface, removing the peel ply backing layer from the co-cured composite material assembly second precursor to form a co-cured composite material assembly second precursor UV/visible light resistant resin layer exposed surface, applying an adhesive layer to at least one of the co-cured composite material assembly first precursor UV/visible light resistant resin layer exposed surface and the co-cured composite material assembly second precursor UV/visible light resistant resin layer exposed surface, and joining the co-cured first composite material assembly precursor to the co-cured second composite material assembly precursor to form a composite material assembly.

Another aspect is directed to a composite material assembly made according to the presently disclosed methods.

A further aspect is directed to a vehicle comprising the composite material assembly made according to present methods.

Another present aspect is directed to an aircraft comprising the composite material assembly made according to present methods.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1A is an illustration of a vehicle in the form of an aircraft, according to present aspects;
FIG. 1B is a cross-sectional view into an aircraft fuel tank in a wing of an aircraft, according to present aspects;
FIG. 2A is an enlarged cross-sectional representative side view of a UV/visible light-resistant co-curable composite material stack, according to present aspects;
FIG. 2B is an enlarged cross-sectional representative side view of a UV/visible light-resistant co-cured composite material stack, according to present aspects;
FIG. 2C is an enlarged cross-sectional representative side view of a UV/visible light-resistant co-cured composite material stack, according to present aspects;
FIG. 3 is a cross-sectional representative side-view of a co-curable composite material stack progressing through a curing stage to form a co-cured composite material stack, according to present aspects;
FIG. 4A is a cross-sectional representative side-view of a co-curable composite material stack precursor and an aircraft structure precursor progressing through manufacturing stages to form an aircraft assembly, according to present aspects;
FIG. 4B is a cross-sectional representative side-view of a co-curable composite material stack precursor and an aircraft structure precursor progressing through manufacturing stages to form an aircraft assembly, according to present aspects;
FIG. 5 is a flowchart outlining a method, according to present aspects;
FIG. 6 is a flowchart outlining a method, according to present aspects;
FIG. 7 is a flowchart outlining a method, according to present aspects; and
FIG. 8 is a flowchart outlining a method, according to present aspects.

### DETAILED DESCRIPTION

Present aspects are directed to the surface treatment of co-curable and co-cured composite material precursors (equivalently referred to herein as "composite material assembly precursors") used in the manufacture of composite material assemblies that can be, for example, structural assemblies. The present surface treatments can increase surface energy and can greatly improve secondary bonding of the treated composite material precursor exposed surface through the application of a co-curable and co-cured peel ply layer that is compatible with a composite material comprising a UV/visible light-resistant material, and that itself (the peel ply) comprises a UV/visible light-resistant material that is compatible and co-curable with a UV/visible light-resistant material-containing composite material.

During the fabrication of composite material parts that can be used to fabricate larger structural assemblies (e.g., aircraft assemblies incorporated into aircraft, etc.), the composite material surfaces of composite material parts (that can comprise, for example, an epoxy resin-based composite material, a carbon fiber reinforced polymer material, etc.), can begin to degrade due to exposure to ambient ultraviolet/visible light (UV/visible light) radiation. To avoid a change in surface or other characteristic (including, for example, discoloration, etc.) of a composite material that can be caused, at least in part, by composite material exposure to UV/visible light radiation, composite material surfaces are often protected with polymeric coverings or coated with at least one protective layer such as, for example, a spray applied surfacer, a primer layer, etc., with the protective layer containing, for example, a UV "blocking" agent.

Applying UV mitigation, or "blocking" agents in layers to composite surfaces often adds manufacturing complexity in the form of, at least, increasing manufacturing time, increasing rework time, increasing overall production cost, etc., as such applied UV blocking material coverings typically are removed from the composite material or reactivated chemically or mechanically before additional composite material assembly processing is conducted.

UV/visible light damage from UV/visible light wavelengths impacting composite material exposed surfaces and coatings before use (e.g., incorporation into an assembly) can cause a composite material to require material rework. In addition, exposure to UV/visible light radiation also can alter a material's characteristic over time. For example, UV/visible light radiation can render a coating layer or composite material vulnerable to processing damage, such as, for example, when a layer or composite material is exposed to, for example, a mechanical paint removal technique, etc. Material layer selection for large structures to guard against environmental damage, including UV/visible light damage, can result in a required application of a series of coating layers, with each such coating layer application resulting in a significant amount of time, expense, and resulting added weight to large structures including, for example, aircraft (where weight considerations can further impact fuel usage, cargo and passenger capacity, aircraft range, etc.).

Present aspects are disclosed that are directed to co-curable and co-cured composite materials comprising a co-curable UV/visible light-resistant layer or co-cured UV/visible light-resistant layer immediately contacting the co-curable or co-cured composite material substrate. The incorporation into the composite material substrate of the co-cured and co-curable UV/visible light-resistant layer significantly impacts composite material manufacture and improves the performance and reduces the weight of the structural composite material by at least obviating the need to include separate UV-resistant coatings formerly applied to composite material substrates, such as for the protection of composite materials from UV/visible light damage, and in the preparation of a composite material system used in structural assemblies for larger components, including internal and exterior surfaces of vehicles, including, for example, aircraft.

According to further present aspects, co-curable and co-cured composite materials that incorporate UV/visible light-resistant layers can be co-curable and co-cured composite material precursors for use in the fabrication of larger assemblies. When such composite material assembly precursors are to be joined together in a larger assembly it is desirable to increase the secondary bonding ability of such composite material parts. The secondary bonding ability of composite material parts that are to be joined together, or adhered together can display an increased secondary bonding by increasing the surface energy (and surface area) of an exposed surface. Such increased surface energy (and increased surface area) can be imparted on a composite material surface by, for example, machining an exposed surface to "roughen" an exposed surface to which an adhesive can be applied, for example. Such additional machining can require significant added processing and added cost. In addition, such machined surface-altering may be imprecise, or create non-uniform and random surface alterations at a composite material surface. Such uneven surface processing can adversely impact secondary bonding and bonding strength at the surface of a composite material.

According to present aspects, during composite material assembly precursor manufacture, a co-curable peel ply layer is layed up on the outermost surface of the co-curable (e.g., uncured) composite material assembly precursor "stack", and the entire composite material "stack", including the applied peel ply layer can be co-cured together at a selected curing regimen. The co-curable peel ply layer comprises a fiber-and-resin system that is selected to have a texture and surface characteristics at the peel ply exterior surface that can be selected to be uniform, and that can be selected to impart such texture and surface characteristics to a co-curable composite material surface onto which the peel ply layer is placed and compressed.

According to one example, after co-curing - and just prior to bonding the composite material assembly precursor to another assembly component/part - the co-cured peel ply layer is removed ("peeled") from the co-cured composite material assembly precursor to reveal the co-cured composite material assembly precursor bonding surface, with the surface energy of the co-cured composite material precursor bonding surface increased to a selected degree through the application of the co-curable and co-cured peel ply.

The co-curable and co-cured peel ply layer can incorporate a dry and unimpregnated sheet of fabric having a selected surface texture. In another aspect, the peel ply layer can incorporate a "wet", pre-impregnated material that can be impregnated with a resin-based material that is compatible with the co-curable and co-cured UV/visible light-resistant material that is, for example, incorporated into the composite material substrate and that is responsible for providing the composite material substrate with a selected amount of UV/visible light protection. The resin-based material impregnated into the peel ply layer material can be a UV/visible light-resistant resin system that is the same or different than the UV/visible light-resistant material incorporated into or onto the composite material substrate of the composite material assembly precursor (e.g., as a separate layer or film ply, etc.)

The term "compatible" with respect to material in the co-curable and co-cured peel ply layer (being "compatible" with the UV/visible light-resistant material in the composite material substrate) means that the components of the co-curable and co-cured peel ply layer (that can incorporate a backing layer) will not interfere with and are specifically selected to not interfere with the co-curable and co-cured UV/visible light-resistant material or the composite material substrate, during or after co-curing. In other words, the composition of the co-curable and co-cured peel ply layer is configured to, at least, not interfere with (and preferably augment or otherwise improve) a selected and resulting secondary bonding characteristic at an exposed surface of the co-cured composite material assembly precursor.

The secondary bonding characteristic can include a selected, physical topography at the composite material precursor surface that improves secondary bonding by, for example, increasing surface energy, etc.. The secondary bonding characteristic can also include a chemical characteristic of the composite material precursor surface that can be imparted, for example, by a UV/visible light-resistant material layer located at the composite material assembly precursor surface designed to increase secondary bonding with, for example, a later-applied adhesive, etc.

According to a present aspect, the selected surface characteristics of the co-curable peel ply layer are selected to condition and otherwise alter and "prepare" the composite material surfaces for significantly improved secondary bonding and co-bonding with a surface to which the composite material will be joined, co-bonded, adhered, etc.; including, for example, the joining of presently disclosed composite material assembly precursors to other structures in, for example, the preparation and fabrication of presently disclosed composite material assemblies that include the present composite material assembly precursors. In addition, the co-curable and co-cured peel ply layer can protect the composite material assembly precursor from exposure to contaminants, and/or from physical damage, oxidation, etc. that can occur, for example, during manufacture and/or storage, and that could weaken secondary bonds at the bonding area of the composite material assembly precursor.

In addition, according to present aspects, the selected fiber component of the fiber-and-resin construction of the co-curable and co-cured peel ply layer is selected to increase the surface energy of the co-cured composite material assembly precursor bonding surface by creating a selected surface texture and selected surface area, the characteristics of which can be "transferred" from the peel ply layer to the surface of the composite material assembly precursor that contacts the peel ply layer.

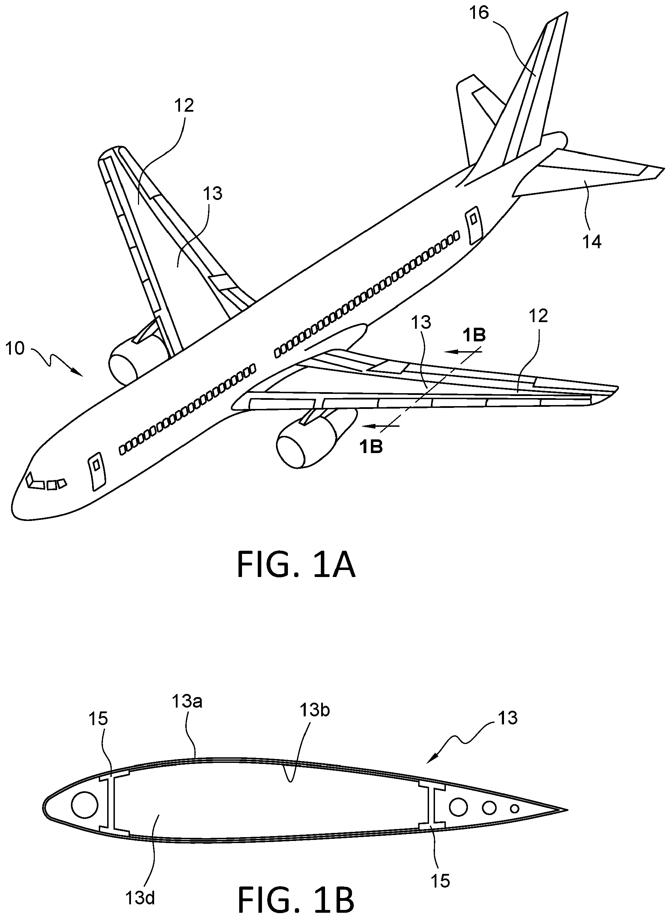

FIG. 1A is an illustration of a vehicle in the form of an aircraft, according to present aspects. As shown in FIG. 1A, aircraft 10 includes wing assemblies 12, wing assembly fuel tank assemblies 13, horizontal stabilizer assemblies 14, and vertical stabilizer assembly 16 with the presently disclosed composite materials configured to form and otherwise be configured to form various aircraft assemblies including those shown in FIG. 1A. As further shown in FIG. 1A aircraft wing assemblies 12 comprise vehicle fuel tanks in the form of aircraft fuel tanks within the wing assemblies (referred to equivalently herein as aircraft wing assembly fuel tanks), with FIG. 1B showing a cross-sectional side view into wing assembly 13 along line 1B-1B.

As shown in FIG 1B, aircraft wing assembly fuel tank 13 comprises a wing assembly fuel tank outer surface 13a and a wing assembly fuel tank inner surface 13b. FIG. 1B further shows a wing assembly fuel tank cavity 13d, with the wing assembly fuel tank cavity 13d defined by (e.g. surrounded by, bounded by) the aircraft wing assembly fuel tank inner surface 13b. The presently disclosed composite material assembly precursors can be configured to form and otherwise be configured to form various aircraft assemblies including those shown in FIGs. 1A and 1B.

According to present aspects a co-curable composite material substrate is provided that can comprise an epoxy resin-based composite material in combination with a fiber in a matrix that can include carbon fibers, boron, fibers, aramid fibers, fiberglass fibers, polyester fibers, and combinations thereof, with carbon fibers being particularly preferred, and with a co-curable carbon fiber-reinforced polymer composite material being a particularly preferred composite material substrate.

According to further presently disclosed aspects, a co-curable and co-cured composite material assembly precursor for use in the manufacture of a composite material assembly further includes a co-curable and co-cured UV/visible light-resistant layer (equivalently referred to herein as a UV/visible light-inhibiting layer) with the UV/visible light-resistant layer provided to the composite material exclusively in the form of a co-curable UV/visible light-resistant layer that can be, for example, a single co-curable UV/visible light-resistant layer ply (for example, in the form of a single ply film layer) as the co-curable UV/visible light-resistant layer.

According to further present aspects, the co-curable UV/visible light-resistant layer comprises at least one of fiberglass fibers, carbon fibers, polyester fibers, aramid fibers, boron fibers, quartz, and combinations thereof. According to further present aspects, the co-curable UV/visible light-resistant layer is provided in intimate contact with the co-curable composite material substrate material, with the composite material substrate being co-curable with the co-curable UV/visible light-resistant layer to form a co-cured UV/visible light-resistant coated composite material assembly precursor.

According to present aspects, a "co-curable" material is defined as a material that can be co-cured with another material such that the two co-curable materials will co-cure when exposed to common curing conditions, such as those that can be imposed by a selected curing regimen (selected temperature, pressure, ramp up temperatures/rates, dwell periods, etc.) to form a "co-cured" composition.

The composite material substrate, also referred to equivalently herein as the base layer or the underlayer, or the composite material substrate layer can be a co-curable composite material that can be an epoxy resin-based material, including fiber reinforced polymer composite materials that can have an epoxy resin-based matrix, and that can include carbon fiber reinforced composite materials. In present aspects, the co-curable composite material can be any suitable composite material that can be co-cured with a co-curable material layer at a temperature ranging from about 250°F to about 410°F.

Composite materials are often layered into laminates that have a selected number of composite material layers, often called "prepregs". Prepregs can be "pre-impregnated" composite fibers where a matrix material, such as an epoxy resin-based material, is already present. The fibers often take the form of a weave and the matrix is used to bond them together and to other components during manufacture. The composite matrix material is typically partially cured to allow easy handling. Such composite matrix material may require cooled or cold storage to prevent further partial curing, or complete curing, and such composite matrix material is referred to as B-Stage material. Consequently, B-Stage prepregs are stored in cooled or cold storage areas, as ambient heat can accelerate complete polymerization. Prepregs also allow one to impregnate a bulk amount of fiber and then store the prepreg in cooled or cold storage areas for an extended time until a later cure. Prepreg plies may be applied to tools which are flat or contoured depending upon the fabrication process used. Multiple layers of prepreg plies are used to make a desired shape using shaping or forming tools, also called mandrels. Present aspects contemplate, but are not limited to, the use of laid up layers of composite material prepregs to form the co-curable and co-cured composite material substrate precursor that incorporates a compatible composite material surface-energy-increasing co-curable and co-cured peel ply layer.

According to present aspects, a selected degree of UV/visible light-resistance and UV/visible light-protection can be exclusively imparted to the composite material substrate by immediately contacting a co-curable composite material surface with a co-curable UV/visible light-resistant layer that, for example, after co-curing forms a co-cured UV/visible light-resistant composite material. That is, according to present aspects, previously required UV/visible light-resistant primers, UV-blocking paints, etc., can be eliminated and their presence is otherwise obviated as their UV protection function within a UV/visible light-resistant composite material is exclusively satisfied by the addition and placement of a co-curable UV/visible light-resistant layer that is provided in immediate contact with the co-curable composite material substrate.

By co-curing the co-curable UV/visible light-resistant layer with the co-curable composite material and the selected compatible co-curable and co-cured peel ply layer, advantages are imparted by the presently disclosed treated co-cured UV/visible light-resistant layer at least to the underlying epoxy-based composite material as well as to the exposed surface characteristics of the co-cured composite material assembly precursors when used as precursors that are to be co-joined with other composite material assembly precursors to form a composite material assembly.

According to present aspects, such imparted advantages include, without limitation, the UV/visible light protection of, for example, an epoxy-based composite material, and protection of a composite material assembly precursor from deleterious surface effects during storage, etc., as well as the introduction of increased surface energy into an eventual exposed surface of co-cured UV/visible light-resistant composite material assembly precursor by the application of a compatible co-curable peel ply layer to the exposed surface of the co-curable UV/visible light-resistant composite material assembly precursor, with a compatible co-curable peel ply layer comprising a fiber-and-resin system that can both comprise a UV/visible light-resistant resin, and that can be selected to be compatible with the co-curable UV/visible light-resistant material incorporated into the co-curable composite material assembly precursor to which the peel ply is applied and co-cured.

Through the use of the presently disclosed co-curable and co-cured UV/visible light-resistant composite material assembly precursor with the compatible peel ply layer, a significant number of procedural steps that are otherwise, and have previously been, required are obviated; resulting in a substantial reduction in resources including, for example, material cost for replacing UV/visible light-damaged layers, manpower hours previously required for individual layer application treatment (e.g., costs, delays, and processing complexities associated with individual layer pre-treatment surfacing steps, layer application steps, layer post-treatment surfacing steps, including chemical application, physical surfacing treatments such as, including sanding, etc., inspection of deposited layers, etc.).

Co-cured UV/visible light-resistant composite assembly precursors can be joined and integrated into larger composite material assemblies, including, for example, aircraft assemblies, including, for example, an aircraft wing assembly that, for example, can include, for example, a stringer that can be a composite material stringer, a spar that can be a composite material spar, etc., co-joined to a composite material skin. Such composite material precursors can be joined together by adhering composite material precursors together, for example, with an interposed adhesive material layer that can be cured. The exposed surfaces of the composite material precursors are typically separately treated to increase the secondary bonding that occurs at the exposed surfaces. Typical treatments can include separate treatments that significantly increase the surface energy and surface area of the exposed surfaces, but that also significantly increase processing complexity, cost, weight, etc.

One cost-effective method of increasing surface energy of an exposed composite material surface includes the use of a protective peel ply layer that is applied to the composite material exposed surface. Attempts to co-cure a co-curable peel ply layer applied to protect co-curable composite material "stacks" having a UV/visible light-resistant layer at or near the composite material exposed surface have experienced uneven results during co-curing. While not being bound to any particular theory, it is believed that co-curable UV/visible light-resistant layers incorporated into the composite material have not been compatible with the available peel ply layers used to protect exposed co-curable and co-cured composite material surfaces until use (e.g., from surface damage, discoloration, adverse environmental effects, oxidation, etc.).

Present aspects are directed to significantly superior co-curable and co-cured UV/light-resistant composite material assembly precursors having a compatible peel ply layer, composite material assemblies incorporating the present co-cured UV/visible light-resistant composite material precursors, and methods for making and using and incorporating into present composite material assembles the presently disclosed co-curable and co-cured UV/visible light-resistant composite material assembly precursors.

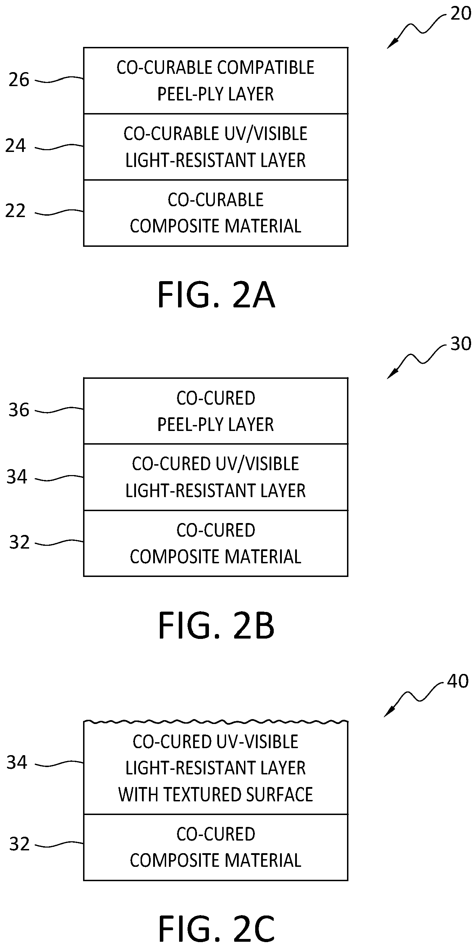

According to present aspects, FIG. 2A shows an enlarged cross-sectional representative side view of a co-curable composite material precursor "stack" 20 including a co-curable composite material substrate 22 with a co-curable UV/visible light-resistant layer 24 disposed onto the co-curable composite material 22. FIG. 2A further shows a compatible co-curable peel ply layer 26 disposed onto the co-curable UV/visible light-resistant layer 24. The co-curable peel ply layer 26 comprises a fiber-and-resin system that is compatible with the co-curable UV/visible light-resistant layer 24, and the co-curable peel ply layer 26 will transfer a selected degree of surface characteristics of the textured peel ply layer fiber component to the co-curable UV/visible light-resistant layer 24. According to present aspects, upon co-curing, and subsequent removal of the peel ply layer from the co-cured UV/visible light-resistant layer 34 (shown in FIG. 2B) a significant increase in the surface energy of an exposed co-cured UV/visible light-resistant layer of the cured composite material assembly precursor 40 (shown, for example, in FIG. 2C) is realized.

The co-curable composite material 20 can be subjected to a co-curing regimen where, for example, the co-curable UV/visible light-resistant layer 24, the co-curable composite material substrate 22, and the compatible co-curable peel ply layer are co-cured at a curing temperature less than 410°F, and more preferably at a temperature ranging from about 250°F to about 410°F for a suitable duration to co-cure the components to form a co-cured UV/visible light-resistant composite material assembly precursor. As shown in FIG. 2A, the co-curable composite material substrate 22 can be a co-curable carbon fiber-reinforced polymer composite material substrate that can further be a co-curable epoxy resin-based composite material substrate.

FIG. 2B shows a co-cured UV/visible light-resistant composite material assembly precursor 30 (with a compatible co-cured peel ply layer 26 still in place) that is formed from the uncured components shown in FIG. 2A, and now co-cured in a selected co-curing regimen. As shown in FIG. 2B, a co-cured UV/visible light-resistant layer 34 is co-cured with the co-cured composite material substrate 32, and with the compatible co-cured peel ply 36 layer in place. According to present aspects, the co-cured UV/visible light-resistant layer 34 can be a single ply, or can be more than one ply, with the co-cured UV/visible light-resistant layer 34 able to exclusively impart (i.e., can be essentially 100% responsible for imparting) a selected degree of UV/visible light protection to the underlying co-cured composite material substrate 32 such that the co-cured UV/visible light-resistant layer has a UV/visible light transmittance value ranging from about 0% to about 20% UV/visible light transmittance for UV/visible light wavelengths ranging from about 180 nm to about 800 nm when the co-cured UV/visible light-resistant layer comprises an average thickness ranging from about 2 mils to about 6 mils. That is, according to present aspects, the UV/visible light blocking capabilities of the co-cured UV/visible light-resistant layer eliminate the need for, render redundant, and otherwise obviate the presence of any additional UV/visible light-resistant layer in a composite material system including, for example, UV/visible light-resistant paints, UV/visible light-resistant primers, UV/visible light-resistant topcoats, as well as obviating the need for incorporating UV/visible light-blocking agents into the composite material substrate precursor. Instead, the entire UV/visible light-blocking function for the presently disclosed co-cured composite material precursor for the composite material assemblies, and structures incorporating the presently disclosed co-cured composite material assemblies, can be completely satisfied by the UV/visible light-blocking capabilities introduced to the resulting co-cured composite material assembly by the co-curable and co-cured UV/visible light-resistant layer, that can be, for example, a single ply UV/visible light-resistant layer. Again, according to present aspects, no additional UV/visible light-resistant layers are needed to achieve the desired and selected UV/visible light-blocking function for the presently disclosed co-cured composite material assemblies.

In another example, a selected portion or degree of the UV/visible light protection imparted to the underlying co-cured composite material substrate 32 can be delivered and otherwise imparted to the co-cured composite material substrate by co-curable UV/visible light-resistant material impregnated within, for example, a fiber matrix in the compatible co-curable peel ply layer 26 (e.g., a UV/visible light-resistant fiber and resin system associated with the present peel ply layer applied to the exposed surface of the co-curable composite material assembly precursors).

According to present aspects, the co-cured UV/visible light-resistant composite material assembly precursor of the type shown in FIG. 2B (for example, after removal of the co-cured peel ply layer), can be used as a structural composite material precursor for the manufacture of composite material assemblies and/or sub-assemblies that can be, for example, structural assemblies and/or sub-assemblies of vehicles, including, for example, aircraft, and including, for example, an aircraft wing assembly, an aircraft horizontal stabilizer, and an aircraft vertical stabilizer, an aircraft wing fuel tank, etc.

FIG. 2C is an enlarged cross-sectional representative side view of a co-cured UV/visible light-resistant composite material assembly precursor 40 in the form of a co-cured composite material system that further includes the co-cured UV/visible light-resistant composite material layer 34 having an exposed surface with a selected surface energy (e.g. surface area) to facilitate a significantly increased selected degree of secondary bonding of the textured composite material precursor (as compared to a non-textured exposed composite material surface or a textured or non-textured composite material surface after co-curing with a non-compatible peel ply layer) with, for example, another composite material precursor to form a composite material assembly that can be a structural composite material assembly. That is, FIG. 2C shows a co-cured composite material assembly precursor 40 with the co-cured UV/visible light-resistant layer 34 disposed onto the co-cured epoxy resin composite material substrate 32, and with the co-cured peel ply layer now removed, and with the co-cured composite material precursor now ready for further processing, including, for example, the fabrication of a composite material assembly incorporating the co-cured composite material assembly precursor 40.

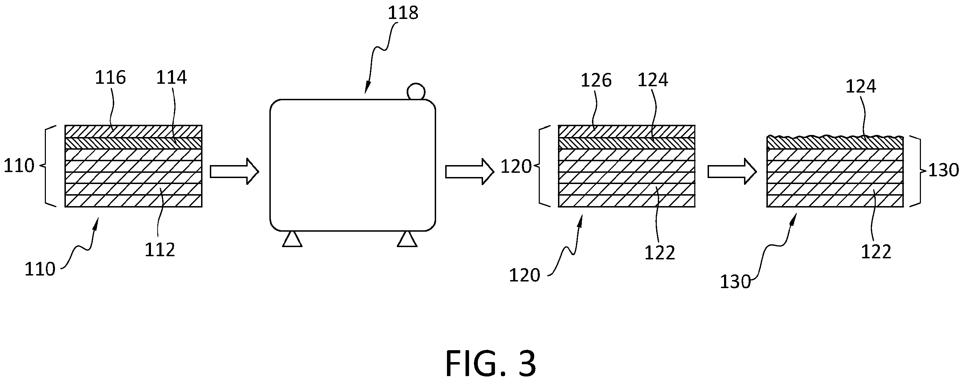

FIG. 3 is a partial cross-sectional side view of a representative and non-limiting co-curing process of the type useful in making the co-cured composite material precursors, including, for example, a process for making the co-cured composite material precursor 130 (similar to co-cured composite material assembly precursor 40 shown in FIG. 2C) that can be, for example, a composite material skin. As shown in FIG. 3, a co-curable composite material first precursor 110 (for example, in the form of a co-curable composite material "stack") comprises a co-curable composite material substrate 112 that can be a co-curable carbon fiber-reinforced polymer material substrate and that can further be a co-curable epoxy resin-based fiber-reinforced composite material substrate. A co-curable UV/visible light-resistant material layer 114 is shown disposed onto the co-curable composite material substrate 112. A co-curable peel ply layer 116 is disposed and otherwise positioned to cover the co-curable UV/visible light-resistant material layer 114 to form the co-curable composite material first precursor 110. The co-curable peel ply layer comprises a fiber-and-resin system that is selected to be compatible with and is further co-curable with the UV/visible light-resistant material layer. In the co-curable state, the co-curable composite material first precursor can be stored (e.g., cool storage or cold storage), with the co-curable peel ply layer acting as a protective layer for the composite material precursor exterior surface during storage in a storage environment.

As further shown in FIG. 3, the co-curable composite material first precursor 110 is then introduced into autoclave 118, in which the co-curable composite material first precursor 110 is subjected to a selected co-curing regimen; for example, a co-curing regimen at a temperature ranging from about 250°F to about 410°F.

After co-curing, the now co-cured composite material first precursor 120 comprises a co-cured composite substrate 122 comprising a co-cured region of UV/visible light-resistant material 124 covered by a compatible co-cured peel ply layer 126. In the last stage shown in FIG. 3, if the co-cured composite material first precursor 120 is ready to be, for example, incorporated into a composite material assembly. The co-cured-peel ply layer 126 can be removed from the co-cured composite material precursor 120 to form co-cured composite material first precursor 130 now having an exposed outer surface with characteristics imparted by the compatible peel ply layer (now removed). The imparted surface characteristics can include, for example, a selected surface energy that can significantly improve the secondary bonding at the now exposed surface of the co-cured UV/visible light-resistant material layer 124 of the co-cured composite material first precursor 130.

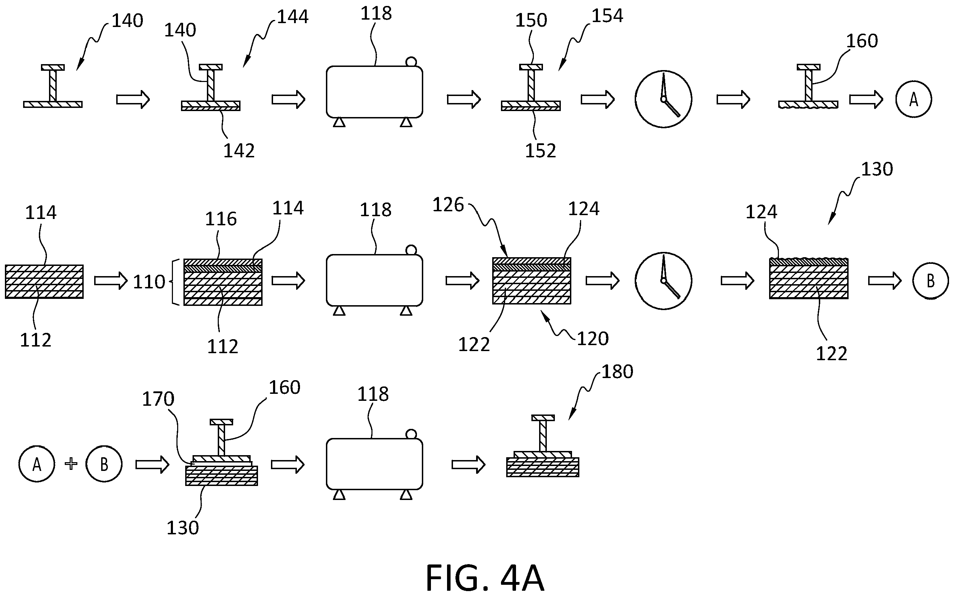

FIG. 4A is a partial cross-sectional side view of a representative and non-limiting co-curing process of the type useful in making and then assembling (for example, into a composite material assembly) co-cured composite material first and second precursors disclosed herein. The exemplary processing protocol for a co-cured composite material first precursor 130 (shown in FIG. 3) is shown again in FIG. 4A as an exemplary process to yield co-cured composite material assembly first precursor 130 (also designated in FIG. 4A as product or co-cured composite material assembly precursor "B", that can be, for example, a composite material "skin").

FIG. 4A further shows an exemplary and non-limiting preparation of a co-curable composite material assembly second precursor 140, shown, for example, in the form of a stringer that is to be combined with the "skin", "B" (a first precursor) to form a composite material assembly 180 that can be, for example, an aircraft wing assembly. As shown in FIG. 4A, a compatible co-curable peel ply is applied to an exposed end of co-curable composite material component 140 (to be joined, for example, to co-cured composite material assembly first precursor 130) to form co-curable composite material assembly second precursor 144. The co-curable composite material component 140 and the compatible co-curable peel ply 142 (that together form the co-curable composite material assembly second precursor 144) are delivered to autoclave 118 and co-cured according to a selected co-curing regimen to form a co-cured composite material assembly second precursor 150 with compatible co-cured peel ply 152 to form co-cured composite material assembly second precursor 154 (also designated in FIG. 4A as product or composite material assembly precursor "A", that can be a co-cured composite material "stringer" for example).

Before (e.g., if, desired, immediately prior to) further processing and combining of the first and second composite material assembly precursors into a composite material assembly, FIG. 4A further shows removal of the co-cured peel ply layer 152 from the composite material assembly second precursor 154 to form the co-cured composite material second precursor 160 now having an exposed outer surface having surface textured characteristics imparted by the compatible peel ply layer (now removed), and with the second precursor exposed surface now including, for example, a selected surface energy giving the co-cured composite material second precursor a selected and significantly improved bonding surface at the now exposed surface of the co-cured composite material assembly second precursor 160 (also designated in FIG. 4A as composite material precursor "A").

FIG. 4A further shows combining the precursors A and B together to form a composite material assembly formed by interposing an adhesive layer 170 between the exposed surfaces of co-cured composite material assembly first precursor 130 and co-cured composite material assembly second precursor 160. After subjecting the adhered composite material precursors and adhesive layer to autoclave 118 for a selected adhesive curing regimen, the finished composite material assembly 180 is formed comprising the composite material first precursor 130 and composite material second precursors 160.

In another example, the surface area increase and surface energy increase that is created on the surface of a co-curable and/or co-cured composite material precursor (e.g., the first precursor shown in FIG. 4A as co-curable composite material first precursor 110 notably without the compatible co-curable peel ply layer) to increase secondary bonding performance of precursors in a composite material assembly can be realized in alternate ways beyond the illustrative process shown in FIG. 4A.

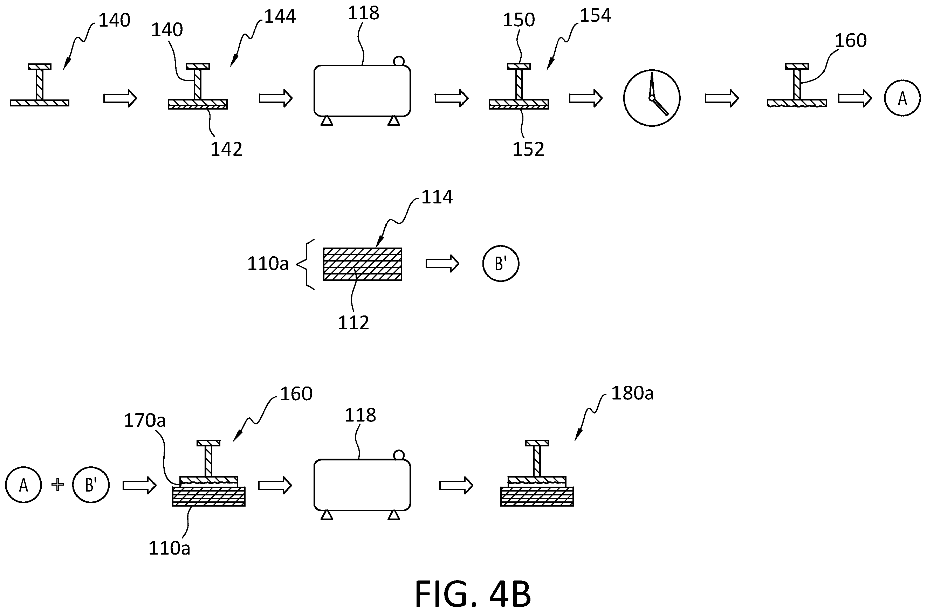

As shown in FIG. 4B, according to another present aspect, a co-curable (e.g., and an uncured) composite material first precursor 110a notably does not comprise a peel ply layer introduced to the co-curable prior to the assembly of the first precursor 110a with co-cured composite material second precursor 160. That is, as shown in FIG. 4B further shows an exemplary and non-limiting preparation of a co-curable composite material assembly second precursor 140, shown, for example, in the form of a stringer that is to be combined with the "skin", "B" (a composite material first precursor) to form a composite material assembly 180 that can be, for example, an aircraft wing assembly.

As shown in FIG. 4B, a compatible co-curable peel ply is applied to an exposed end of co-curable composite material component 140 (to be joined, for example, to co-curable composite material assembly first precursor 110a) to form co-curable composite material assembly second precursor 144. The co-curable composite material component 140 and the compatible co-curable peel ply 142 (that together form the co-curable composite material assembly second precursor 144) are delivered to autoclave 118 and co-cured according to a selected co-curing regimen to form a co-cured composite material assembly second precursor 150 with compatible co-cured peel ply 152 to form co-cured composite material assembly second precursor 154 (also designated in FIG. 4B as product or composite material assembly precursor "A", that can be a co-cured composite material "stringer" for example).

Before (e.g., if, desired, immediately prior to) further processing and combining of the first and second composite material assembly precursors into a composite material assembly, FIG. 4B further shows removal of the co-cured peel ply layer 152 from the composite material assembly second precursor 154 to form the co-cured composite material second precursor 160 now having an exposed outer surface having surface textured characteristics imparted by the compatible peel ply layer (now removed), and with the second precursor exposed surface now including, for example, a selected surface energy giving the co-cured composite material second precursor a selected and significantly improved bonding surface at the now exposed surface of the co-cured composite material assembly second precursor 160 (also designated in FIG. 4B as composite material precursor "A").

FIG. 4B further shows combining the precursors A and B together to form a composite material assembly formed by interposing an adhesive layer 170a between the exposed surfaces of the co-curable composite material assembly first precursor 110a and co-cured composite material assembly second precursor 160. According to present examples, the adhesive layer can be added to either or both of composite materials "A" and/or "B" so long as the adhesive layer 170 is interposed between the first and second precursor joining surfaces. After subjecting the adhered composite material first and second precursors and adhesive layer to autoclave 118 for a selected adhesive curing regimen, the finished cured composite material assembly 180a is formed comprising the now cured composite material first precursor 110a joined to the cured composite material second precursors 160.

According to present aspects, curing and co-curing regimens can be selected to improve material compatibility and secondary bonding of the first and second composite materials to be joined, as well as improve processing capabilities of the compatible constituent materials incorporated into the co-curable peel ply layer; including with respect to compatibility of the peel ply layer with the UV/visible light-resistant constituent material(s) and layers incorporated into the composite material first precursor.

Such selected curing regimens can include partial or incomplete curing of the first and second precursors before and after joining the first and second precursors (e.g., including joining the first and second precursors with an interposed adhesive layer). For example, according to present aspects, and as disclosed herein, the co-curable composite material first precursor can comprise a co-curable composite material substrate that can be referred to as a co-curable structural composite material substrate. According to present aspects, and as disclosed herein, the co-curable composite material first precursor further comprises a UV/visible light-resistant material layer that can be equivalently referred to herein as a UV/visible light-resistant material surface layer that is positioned to substantially completely cover the co-curable composite material substrate, and that can be configured to protect the co-curable composite material substrate from environmentally detrimental effects of UV/visible light degradation, for example.

According to some present examples, at least the co-curable composite material first precursor can include a fiber-and-resin system that is selected to provide the co-curable composite material first precursor with resin components in the UV/visible light-resistant (surface) layer that facilitate a gel time at a selected gel temperature that is less than (e.g., faster than) the gel time at a selected gel temperature of the resin systems and components incorporated in the a co-curable composite material substrate underlying the UV/visible light-resistant (surface) layer. Present aspects contemplate selecting curing regimens that incorporate initial and subsequent curing regimens such that, for example, a UV/visible light-resistant (surface) layer is at least partially cured,(e.g., during an initial cure stage) before at least partially curing the co-curable composite material substrate underlying the UV/visible light-resistant (surface) layer. In addition, present aspects further contemplate selecting curing regimens that incorporate initial and subsequent curing regimens such that, for example, during a subsequent cure, a UV/visible light-resistant (surface) layer is fully cured before fully curing the co-curable composite material substrate underlying the UV/visible light-resistant (surface) layer.

According to present aspects, when the selected gel time of the uncured UV/visible light-resistant (surface) layer of the composite material first precursor is less than (e.g., faster than) the selected gel time of the composite material substrate of the composite material first precursor, the uncured UV/visible light-resistant (surface) layer may gel more quickly at a given temperature. That is, the cure kinetics of the selected resin in the uncured UV/visible light-resistant (surface) layer may be relatively faster than the cure kinetics of selected resin in the composite material substrate of the composite material first precursor. The earlier gelling of the uncured UV/visible light-resistant (surface) layer may further protect the uncured composite material substrate layers from, at least, UV/visible light degradation, etc. by facilitating the at least partial separation between the cured resin in the UV/visible light-resistant (surface) layer and the cured resin in the composite material substrate of the composite material first precursor.

By selecting varied gel times between component layers in the composite material first precursor, mixing, mingling, and/or diffusion between the co-curable UV/visible light-resistant (surface) layer and the underlying co-curable composite material substrate can increase uniformity of a selected characteristic of an exposed surface and further facilitate improved and selected secondary bonding characteristics of the composite material first precursor with a composite material second precursor to form an improved composite material assembly.

According to further aspects, the present peel ply layers comprising a fiber-and-resin system compatible with the UV/visible light-resistant layer at the exposed joining surfaces of the composite material first precursor can further comprise a selected amount of UV/visible light-resistant resin material that will be compatible with the UV/visible light-resistant layer in the first precursor in terms of both constituent material and constituent material characteristic, including gel time and gel temperature, for example. The compatibility of the peel ply layer components with the first precursor material can further enhance and otherwise increase secondary bonding at the joining surfaces of the first and second composite material precursors.

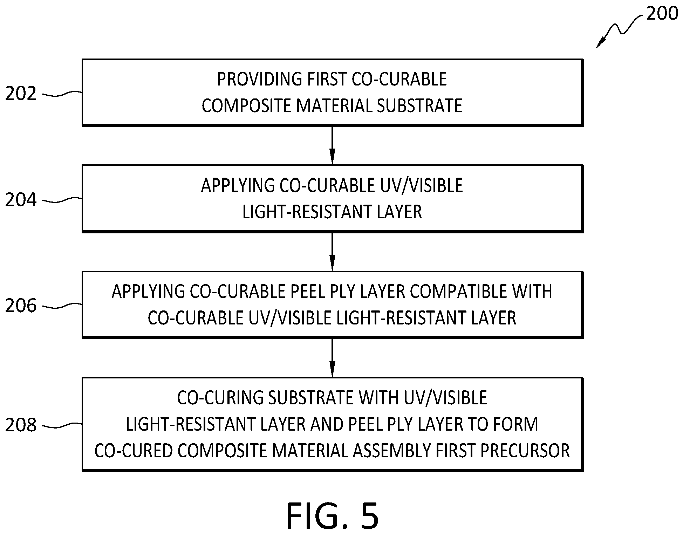

According to present aspects, FIG. 5 is a flowchart outlining a method for treating co-curable UV/visible light-resistant composite material substrate with the compatible peel ply layer to form a co-cured UV/visible light-resistant composite material precursor for use in a composite material assembly. As shown in FIG. 5, a method 200 includes providing 202 a first co-curable composite material substrate, applying 204 a co-curable UV/visible light-resistant layer onto the first composite material substrate, with the co-curable UV/visible light-resistant layer comprising a first co-curable UV/visible light-resistant resin that can be, for example, an epoxy-based resin, and at least one of fiberglass fibers, carbon fibers, polyester fibers, aramid fibers, boron fibers, quartz, and combinations thereof. The method further includes applying 206 a co-curable peel ply fiber-and-resin-containing layer positioned adjacent the co-curable UV/visible light-resistant layer to form a co-curable composite material assembly first precursor, with the co-curable peel ply fiber-and-resin-containing layer further comprising a second co-curable UV/visible light-resistant resin compatible with the co-curable UV/visible light-resistant layer, with the co-curable peel ply fiber-and-resin-containing layer and further comprising a peel ply backing layer covering the co-curable peel ply fiber-and-resin-containing layer. The method further includes co-curing 208 the co-curable composite material substrate with the co-curable UV/visible light-resistant layer and the co-curable peel ply fiber and-resin-containing layer to form a co-cured composite first precursor, for example, for use in a composite material assembly.

In a further aspect, the co-cured UV/visible light-resistant layer in the co-cured composite material assembly first precursor has a UV/visible light transmittance value ranging from about 0% to about 20% UV/visible light transmittance for UV/visible light wavelengths ranging from about 180 nm to about 800 nm when the co-curable UV/visible light-resistant layer comprises an average thickness ranging from about 2 mils to about 6 mils.

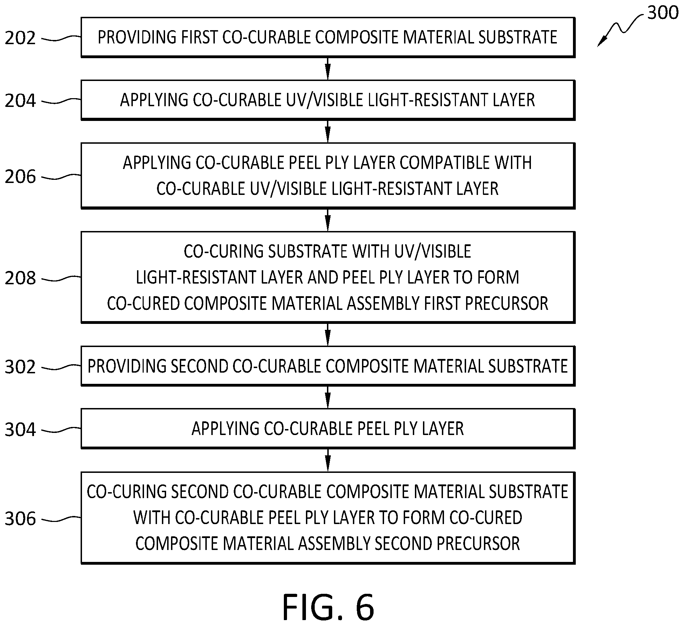

FIG. 6 is a flowchart outlining a method for making the disclosed composite material first and second precursors with method 300 comprising the method 200 and further including providing 302 a co-curable second composite material substrate, applying 304 a co-curable peel ply fiber-and-resin-containing layer positioned adjacent the co-curable second composite material substrate to form a co-curable composite material second precursor, with the co-curable peel ply fiber-and-resin-containing layer further comprising a co-curable UV/visible light-resistant resin compatible with the co-curable UV/visible light-resistant layer in a co-cured state, and with the co-curable peel ply fiber and-resin-containing layer further comprising a peel ply backing layer covering the co-curable peel ply fiber-and-resin-containing layer. The method 300 further includes co-curing 306 the co-curable second composite material substrate with the co-curable peel ply fiber-and-resin-containing layer to form a co-cured composite material assembly second precursor.

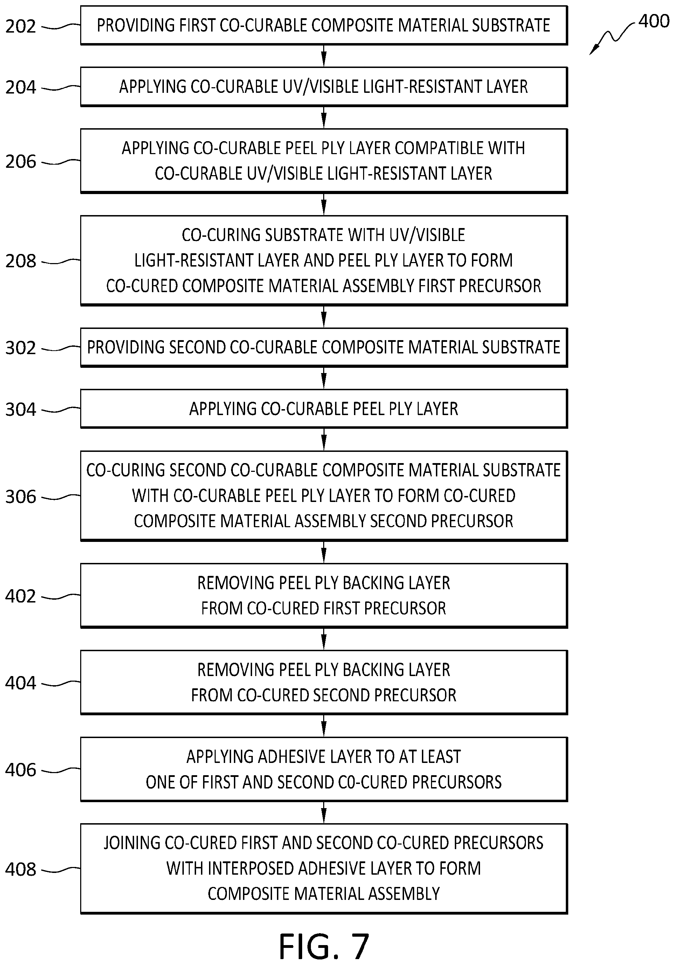

FIG. 7 is a flowchart outlining the manufacture of a composite material assembly comprising the co-cured first and second precursors disclosed herein. As shown in FIG. 7, according to method 400, the first and second composite material precursors can be formed according to the methods 200, 300 as shown and described herein with respect to FIGs. 5 and 6, with method 400 further including removing 402 the peel ply backing layer from the co-cured composite material first precursor to form a co-cured composite material first precursor UV/visible light resistant resin layer exposed surface, removing 404 the peel ply backing layer from the co-cured composite material assembly second precursor to form a co-cured composite material assembly second precursor exposed surface, applying 406 an adhesive layer to at least one of the co-cured composite material first precursor UV/visible light resistant resin layer exposed surface and the co-cured composite material second precursor UV/visible light resistant resin layer exposed surface, and joining 408 the co-cured first composite material assembly precursor to the co-cured second composite material assembly precursor to form a composite material assembly.

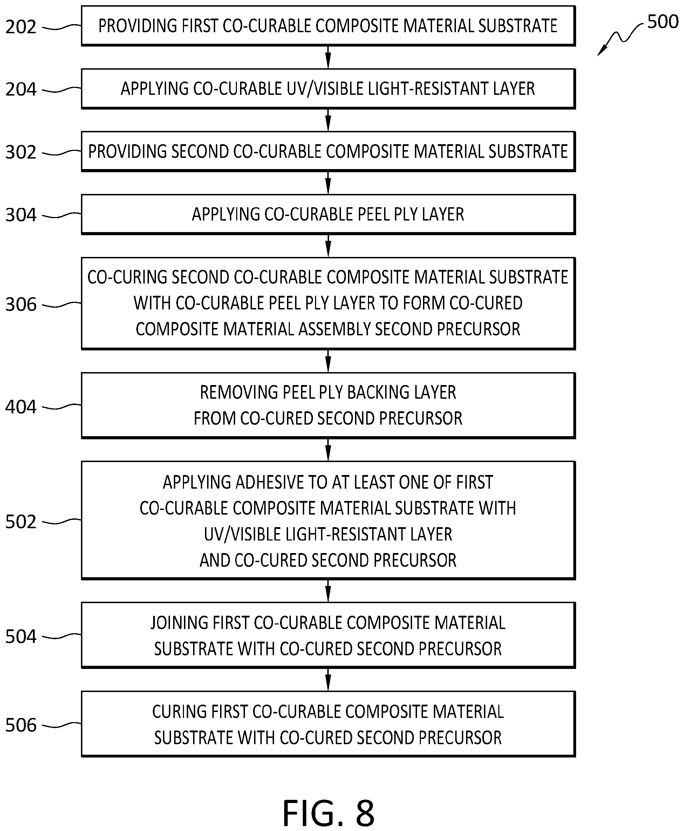

FIG. 8 is a flowchart outlining the manufacture of a composite material assembly comprising the co-cured first and second precursors disclosed herein. As shown in FIG. 8, method 500 includes providing 202 a first co-curable composite material substrate, applying 204 a co-curable UV/visible light-resistant layer onto the first composite material substrate to form a co-curable composite material first precursor, with the co-curable UV/visible light-resistant layer comprising a first co-curable UV/visible light-resistant resin that can be, for example, an epoxy-based resin, and at least one of fiberglass fibers, carbon fibers, polyester fibers, aramid fibers, boron fibers, quartz, and combinations thereof. Method 500 further includes, providing 302 a co-curable second composite material substrate, applying 304 a co-curable peel ply fiber-and-resin-containing layer positioned adjacent the co-curable second composite material substrate to form a co-curable composite material second precursor, with the co-curable peel ply fiber-and-resin-containing layer further comprising a co-curable UV/visible light-resistant resin that is compatible with the co-curable UV/visible light-resistant layer in the co-curable composite material first precursor in a co-curable and in a co-cured state, and with the co-curable peel ply fiber and-resin-containing layer further comprising a peel ply backing layer covering the co-curable peel ply fiber-and-resin-containing layer. The method 500 further includes at least partially co-curing 306 the co-curable second composite material substrate with the co-curable peel ply fiber-and-resin-containing layer to form an at least partially co-cured composite material assembly second precursor.

Method 500 further includes removing 404 the peel ply backing layer from the at least partially co-cured composite material assembly second precursor to form an at least partially co-cured composite material assembly second precursor exposed surface, applying 502 an adhesive layer to at least one of the co-curable composite material first precursor UV/visible light resistant resin layer exposed surface and the at least partially co-cured composite material second precursor UV/visible light resistant resin layer exposed surface, and joining 504 the co-curable first composite material assembly precursor to the at least partially co-cured second composite material assembly precursor to form an at least partially cured composite material assembly, and curing 506 the co-curable composite material first precursor to form a cured composite material assembly.

Further present aspects contemplate co-curable composite materials and co-cured composite materials, assemblies comprising the co-cured composite materials, sub-assemblies comprising the co-cured composite materials, and structures comprising at least one of the assemblies and/or sub-assemblies comprising the co-cured UV/visible light-resistant composite materials that are made according to the methods set forth herein, including, for example, crewed aircraft, an uncrewed aircraft, a crewed spacecraft, an uncrewed spacecraft, a crewed rotorcraft, an uncrewed rotorcraft, a crewed terrestrial vehicle, an uncrewed terrestrial vehicle, a crewed surface water borne vehicle, an uncrewed waterborne vehicle, a crewed sub-surface water borne vehicle, an uncrewed sub-surface water borne vehicle, a satellite, and combinations thereof.

As shown in FIGs. 5, 6, 7, 8 methods 200, 300, 400, 500 as outlined include a co-curable composite material first and second substrates that can both be co-curable carbon fiber reinforced polymer material substrates and can further be a co-curable epoxy resin-based fiber reinforced composite material substrate. According to further present aspects, one or both of the composite material first and second substrates (used to form the first and second precursors) can include a co-curable UV/visible light-resistant layer that can be a co-curable epoxy resin-based composite substrate material, and that can further be a carbon fiber reinforced polymer.

According to present aspects, the co-curable UV/visible light-resistant layer can be a single ply, or can be a plurality of plies, such that the co-curable UV/visible light-resistant layer, upon curing, has a UV/visible light transmittance value ranging from about 0% to about 20% UV/visible light transmittance for UV/visible light wavelengths ranging from about 180 nm to about 800 nm when the UV/visible light-resistant layer comprises an average thickness ranging from about 2 mils to about 6 mils. That is, the co-curable composite material first and second precursors comprising the compatible peel ply layers and the composite material assemblies, and larger assemblies , including vehicle made from the disclosed composite material assemblies as shown in FIG. 1A, 1B, 2A, 2B, 2C, 3, 4A, and 4B can be formed and used according to one or more of the methods outlined in FIGs. 5, 6, 7, and 8.

The co-curable UV/visible light-resistant composite material comprising the UV/visible light-resistant layer in combination with the compatibly-resin-charged co-curable peel ply layer can be a co-curable epoxy resin-based composite material substrate with the co-curable UV/visible light-resistant layer at a temperature ranging from about 250°F to about 410°F to form a co-cured UV/visible light-resistant composite material first precursor of the type shown and described at least in FIGs. 2B, 2C, 3, 4A and 4B, and described herein.

Present aspects contemplate the disclosed composite material assemblies as useful in the fabrication of vehicles and vehicle assemblies including, for example, aircraft wing assemblies, horizontal stabilizer assemblies, vertical stabilizer assemblies, fuselages, fuel tanks within wing assemblies, nacelles, and other aircraft structures and structural components comprising a composite material.

A co-curable composite material assembly precursor (20) (112) can be a co-curable "skin stack"/assembly precursor having the peel ply.

A co-curable composite material assembly precursor (144) can be a co-curable "stringer"/assembly precursor having the peel ply.

A co-cured composite material assembly precursor (154) can be a co-cured "stringer"/assembly precursor having the peel ply.

The method (200) can be for making a co-cured composite material assembly "first" precursor by applying the peel ply to the skin/stack.

The method (300) can be for making a co-cured composite material assembly "second" stringer precursor by applying the peel ply to the stringer.

Further examples are set out on the clauses below:
1.A co-curable composite material assembly precursor, comprising:
   a co-curable composite material substrate; a co-curable UV/visible light-resistant layer, said co-curable UV/Visible light-resistant layer positioned adjacent the composite material substrate, said co-curable UV/visible light-resistant layer comprising a first co-curable UV/visible light-resistant resin, said co-curable UV/visible light-resistant layer further comprising at least one of fiberglass fibers, carbon fibers, polyester fibers, aramid fibers, boron fibers, quartz, and combinations thereof; and a co-curable peel ply fiber-and-resin-containing layer positioned adjacent the UV/visible light-resistant layer, said co-curable peel ply fiber and resin-containing layer comprising at least one of fiberglass fibers, carbon fibers, polyester fibers, aramid fibers, boron fibers, and combinations thereof, said co-curable peel ply fiber-and-resin-containing layer further comprising a second co-curable UV/visible light-resistant resin compatible with the co-curable UV/visible light-resistant layer.
2.The co-curable composite material assembly precursor of Clause 1, wherein the co-curable composite material substrate is co-curable with the co-curable UV/visible light-resistant layer and is further co-curable with the co-curable peel ply fiber-and-resin-containing layer at a temperature ranging from about 121.111 C (250°F) to about 210 C (410°F).
3.The co-curable composite material assembly precursor of Clause 1, wherein the co-curable composite material substrate comprises a carbon fiber reinforced polymer.
4.The co-curable composite material assembly precursor of Clause 1, wherein the co-curable composite material substrate comprises an epoxy resin-based compound and the co-curable composite material substrate further comprises at least one of carbon fibers, boron fibers, aramid fibers, fiberglass fibers, polyester fibers, and combinations thereof.
5.The co-curable composite material assembly precursor of Clause 1, wherein the co-curable composite material substrate comprises a plurality of carbon fiber reinforced polymer prepregs.
6.The co-curable composite material assembly precursor of any one of Clauses 1-5, wherein the co-curable composite material substrate second side is in direct contact with the co-curable UV/visible light-resistant layer and wherein the co-curable UV/visible light-resistant layer completely covers the co-curable composite material substrate second side.
7.A co-cured composite material assembly precursor, comprising: a co-cured composite material substrate; a co-cured UV/visible light-resistant layer, said co-cured UV/Visible light-resistant layer positioned adjacent the first composite material substrate, said co-curable UV/visible light-resistant layer comprising a first co-curable UV/visible light-resistant resin, said co-cured UV/visible light-resistant layer further comprising at least one of fiberglass fibers, carbon fibers, polyester fibers, aramid fibers, boron fibers, quartz, and combinations thereof; a co-cured peel ply fiber-and-resin-containing layer positioned adjacent the co-cured UV/visible light-resistant layer, said co-cured peel ply fiber and resin-containing layer comprising at least one of fiberglass fibers, carbon fibers, polyester fibers, aramid fibers, boron fibers, and combinations thereof, said co-cured peel ply fiber-and-resin-containing layer further comprising a second co-cured UV/visible light-resistant resin compatible with the co-curable UV/visible light-resistant layer;
   wherein the co-cured UV/visible light-resistant layer has a UV/visible light transmittance value ranging from about 0% to about 20% UV/visible light transmittance for UV/visible light wavelengths ranging from about 180 mm to about 800 nm when the co-curable UV/visible light-resistant layer comprises an average thickness ranging from about 2 mils to about 6 mils; and
   wherein the co-cured composite material substrate is co-cured with the co-curable UV/visible light-resistant layer and is further co-curable with the co-curable peel ply fiber-and-resin-containing layer at a temperature ranging from about 121.111 C (250°F) to about 210 C (410°F).
8.The co-cured composite material assembly precursor of Clause 7, wherein the co-cured composite material substrate comprises an epoxy resin-based compound and the co-cured composite material substrate further comprises at least one of carbon fibers, boron fibers, aramid fibers, fiberglass fibers, polyester fibers, and combinations thereof.
9.The co-cured composite material assembly precursor of Clause 7, wherein the co-curable composite material substrate comprises a plurality of carbon fiber reinforced polymer prepregs.
10.A co-curable composite material assembly precursor comprising: a co-curable composite material substrate; a co-curable peel ply fiber-and-resin-containing layer positioned adjacent the co-curable composite material substrate, said co-curable peel ply fiber-and-resin-containing layer further comprising a co-curable UV/visible light-resistant resin.
11. The co-curable composite material assembly precursor of Clause 10, wherein the co-curable composite material substrate comprises a carbon fiber reinforced polymer.
12. The co-curable composite material assembly precursor of Clause 10, wherein the co-curable composite material substrate comprises an epoxy resin-based compound and the co-curable composite material substrate further comprises at least one of carbon fibers, boron fibers, aramid fibers, fiberglass fibers, polyester fibers, and combinations thereof.
13. The co-curable composite material assembly precursor of Clause 10, wherein the co-curable composite material substrate comprises a plurality of carbon fiber reinforced polymer prepregs.
14.A co-cured composite material assembly precursor comprising: a co-cured composite material substrate; a co-cured peel ply fiber-and-resin-containing layer positioned adjacent the co-curable composite material substrate, said co-cured peel ply fiber-and-resin-containing layer further comprising a co-cured UV/visible light-resistant resin.
15.The co-cured composite material assembly precursor of Clause 14, wherein the co-cured composite material substrate comprises a carbon fiber reinforced polymer.
16.The co-cured composite material assembly precursor of Clause 14, wherein the co-cured composite material substrate comprises an epoxy resin-based compound and the co-cured composite material substrate further comprises at least one of carbon fibers, boron fibers, aramid fibers, fiberglass fibers, polyester fibers, and combinations thereof.
17.The co-cured composite material assembly precursor of Clause 14, wherein the co-cured composite material substrate comprises a plurality of carbon fiber reinforced polymer prepregs.
18.A method for making a co-cured composite material assembly, the method comprising: providing a first co-curable composite material substrate; applying a co-curable UV/visible light-resistant layer onto the first composite material substrate, said co-curable UV/visible light-resistant layer comprising a first co-curable UV/visible light-resistant resin, said co-curable UV/visible light-resistant layer further comprising a at least one of fiberglass fibers, carbon fibers, polyester fibers, aramid fibers, boron fibers, quartz, and combinations thereof, applying a co-curable peel ply fiber-and-resin-containing layer positioned adjacent the co-curable UV/visible light-resistant layer to form a co-curable composite material assembly first precursor, said co-curable peel ply fiber-and-resin-containing layer further comprising a second co-curable UV/visible light-resistant resin compatible with the co-curable UV/visible light-resistant layer, said co-curable peel ply fiber-and-resin-containing layer further comprising a peel ply backing layer covering the co-curable peel ply fiber-and-resin-containing layer; and co-curing the co-curable composite material substrate with the co-curable UV/visible light-resistant layer and the co-curable peel ply fiber-and-resin-containing layer to form a co-cured composite material assembly first precursor.
19. The method of Clause 18, wherein said co-cured first composite material assembly precursor comprises a co-cured UV/visible light-resistant layer having a UV/visible light transmittance value ranging from about 0% to about 20% UV/visible light transmittance for UV/visible light wavelengths ranging from about 180 nm to about 800 nm when the co-curable UV/visible light-resistant layer comprises an average thickness ranging from about 2 mils to about 6 mils.
20. The method of Clause 18 or 19, wherein the co-curable UV/visible light-resistant layer is applied as a single ply to the co-curable composite material substrate.
21. The method of any one of Clauses 18-19, wherein the co-curable composite material substrate comprises a carbon fiber reinforced polymer composite material substrate.
22.The method of any of of Clauses 18-19, wherein the co-curable composite material substrate comprises a fiber reinforced epoxy resin matrix, said fiber reinforced epoxy resin matrix comprising at least one of carbon fibers, boron fibers, aramid fibers, fiberglass fibers, polyester fibers, and combinations thereof.
23.A co-cured first composite material assembly precursor made according to the method of Clause 18.
24.The method of Clause 18, further comprising: providing a second co-curable composite material substrate; applying a co-curable peel ply fiber-and-resin-containing layer positioned adjacent the co-curable second composite material substrate to form a co-curable composite material second precursor, said co-curable peel ply fiber-and-resin-containing layer, said co-curable UV/visible light-resistant layer comprising a further comprising a second co-curable UV/visible light-resistant resin compatible with the co-curable UV/visible light-resistant layer in the first co-curable composite material substrate in a co-cured state, said co-curable peel ply fiber-and-resin-containing layer further comprising a peel ply backing layer covering the co-curable peel ply fiber-and-resin-containing layer; co-curing the co-curable second composite material substrate with the co-curable peel ply fiber-and-resin-containing layer to form a co-cured composite material assembly second precursor.
25.A co-cured second composite material assembly precursor made according to the method of Clause 24.
26.The method of Clause 24 further comprising: removing the peel ply backing layer from the co-cured composite material assembly first precursor to form a co-cured composite material assembly first precursor UV/visible light resistant resin layer exposed surface; removing the peel ply backing layer from the co-cured composite material assembly second precursor to form a co-cured composite material assembly second precursor UV/visible light resistant resin layer exposed surface; applying an adhesive layer to at least one of the co-cured composite material assembly first precursor UV/visible light resistant resin layer exposed surface and the co-cured composite material assembly second precursor UV/visible light resistant resin layer exposed surface; and joining the co-cured first composite material assembly precursor to the co-cured second composite material assembly precursor to form a composite material assembly.
27.A composite material assembly made according to the method of Clause 26.
28.A vehicle comprising the composite material assembly of Clause 27.
29.An aircraft comprising the composite material assembly of Clause 27.

The present aspects may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

## Claims

1. A co-curable composite material assembly precursor (20) (112) comprising:
a co-curable composite material substrate (22) (112);
a co-curable UV/visible light-resistant layer (24) (114), said co-curable UV/Visible light-resistant layer positioned adjacent the composite material substrate, said co-curable UV/visible light-resistant layer comprising a first co-curable UV/visible light-resistant resin, said co-curable UV/visible light-resistant layer further comprising at least one of fiberglass fibers, carbon fibers, polyester fibers, aramid fibers, boron fibers, quartz, and combinations thereof; and
a co-curable peel ply fiber-and-resin-containing layer (26) (116) positioned adjacent the UV/visible light-resistant layer, said co-curable peel ply fiber and resin-containing layer comprising at least one of fiberglass fibers, carbon fibers, polyester fibers, aramid fibers, boron fibers, and combinations thereof, said co-curable peel ply fiber-and-resin-containing layer further comprising a second co-curable UV/visible light-resistant resin compatible with the co-curable UV/visible light-resistant layer.

2. The co-curable composite material assembly precursor of Claim 1, wherein the co-curable composite material substrate is co-curable with the co-curable UV/visible light-resistant layer and is further co-curable with the co-curable peel ply fiber-and-resin-containing layer at a temperature ranging from about 121.111 C (250°F) to about 210 C (410°F); and/or optionally
wherein the co-curable composite material substrate comprises a carbon fiber reinforced polymer; or
wherein the co-curable composite material substrate comprises an epoxy resin-based compound and the co-curable composite material substrate further comprises at least one of carbon fibers, boron fibers, aramid fibers, fiberglass fibers, polyester fibers, and combinations thereof; or
wherein the co-curable composite material substrate comprises a plurality of carbon fiber reinforced polymer prepregs.

3. The co-curable composite material assembly precursor of any one of the preceding Claims, wherein the co-curable composite material substrate second side is in direct contact with the co-curable UV/visible light-resistant layer and wherein the co-curable UV/visible light-resistant layer completely covers the co-curable composite material substrate second side.

4. A co-cured composite material assembly precursor (30) (120) comprising:
a co-cured composite material substrate (32) (122);
a co-cured UV/visible light-resistant layer (34) (124), said co-cured UV/Visible light-resistant layer positioned adjacent the first composite material substrate, said co-curable UV/visible light-resistant layer comprising a first co-curable UV/visible light-resistant resin, said co-cured UV/visible light-resistant layer further comprising at least one of fiberglass fibers, carbon fibers, polyester fibers, aramid fibers, boron fibers, quartz, and combinations thereof;
a co-cured peel ply fiber-and-resin-containing layer (36) (126) positioned adjacent the co-cured UV/visible light-resistant layer, said co-cured peel ply fiber and resin-containing layer comprising at least one of fiberglass fibers, carbon fibers, polyester fibers, aramid fibers, boron fibers, and combinations thereof, said co-cured peel ply fiber-and-resin-containing layer further comprising a second co-cured UV/visible light-resistant resin compatible with the co-curable UV/visible light-resistant layer;
wherein the co-cured UV/visible light-resistant layer has a UV/visible light transmittance value ranging from about 0% to about 20% UV/visible light transmittance for UV/visible light wavelengths ranging from about 180 mm to about 800 nm when the co-curable UV/visible light-resistant layer comprises an average thickness ranging from about 2 mils to about 6 mils; and
wherein the co-cured composite material substrate is co-cured with the co-curable UV/visible light-resistant layer and is further co-curable with the co-curable peel ply fiber-and-resin-containing layer at a temperature ranging from about 121.111 C (250°F) to about 210 C (410°F).

5. The co-cured composite material assembly precursor of Claim 4, wherein the co-cured composite material substrate comprises an epoxy resin-based compound and the co-cured composite material substrate further comprises at least one of carbon fibers, boron fibers, aramid fibers, fiberglass fibers, polyester fibers, and combinations thereof; or wherein the co-curable composite material substrate comprises a plurality of carbon fiber reinforced polymer prepregs.

6. A co-curable composite material assembly precursor (44) comprising:
a co-curable composite material substrate(140);
a co-curable peel ply fiber-and-resin-containing layer (142) positioned adjacent the co-curable composite material substrate, said co-curable peel ply fiber-and-resin-containing layer further comprising a co-curable UV/visible light-resistant resin.

7. The co-curable composite material assembly precursor of Claim 6, wherein the co-curable composite material substrate comprises a carbon fiber reinforced polymer; or wherein the co-curable composite material substrate comprises an epoxy resin-based compound and the co-curable composite material substrate further comprises at least one of carbon fibers, boron fibers, aramid fibers, fiberglass fibers, polyester fibers, and combinations thereof; or
wherein the co-curable composite material substrate comprises a plurality of carbon fiber reinforced polymer prepregs.

8. A co-cured composite material assembly precursor (154) comprising:
a co-cured composite material substrate (150);
a co-cured peel ply fiber-and-resin-containing layer (152) positioned adjacent the co-curable composite material substrate, said co-cured peel ply fiber-and-resin-containing layer further comprising a co-cured UV/visible light-resistant resin.

9. The co-cured composite material assembly precursor of Claim 8, wherein the co-cured composite material substrate comprises a carbon fiber reinforced polymer; or wherein the co-cured composite material substrate comprises an epoxy resin-based compound and the co-cured composite material substrate further comprises at least one of carbon fibers, boron fibers, aramid fibers, fiberglass fibers, polyester fibers, and combinations thereof; or
wherein the co-cured composite material substrate comprises a plurality of carbon fiber reinforced polymer prepregs.

10. A method (200) for making a co-cured composite material assembly, the method comprising:
providing (220) a first co-curable composite material substrate;
applying (204) a co-curable UV/visible light-resistant layer onto the first composite material substrate, said co-curable UV/visible light-resistant layer comprising a first co-curable UV/visible light-resistant resin, said co-curable UV/visible light-resistant layer further comprising a at least one of fiberglass fibers, carbon fibers, polyester fibers, aramid fibers, boron fibers, quartz, and combinations thereof,
applying (206) a co-curable peel ply fiber-and-resin-containing layer positioned adjacent the co-curable UV/visible light-resistant layer to form a co-curable composite material assembly first precursor, said co-curable peel ply fiber-and-resin-containing layer further comprising a second co-curable UV/visible light-resistant resin compatible with the co-curable UV/visible light-resistant layer, said co-curable peel ply fiber-and-resin-containing layer further comprising a peel ply backing layer covering the co-curable peel ply fiber-and-resin-containing layer; and
co-curing (208) the co-curable composite material substrate with the co-curable UV/visible light-resistant layer and the co-curable peel ply fiber-and-resin-containing layer to form a co-cured composite material assembly first precursor.

11. The method of Claim 10, wherein said co-cured first composite material assembly precursor comprises a co-cured UV/visible light-resistant layer having a UV/visible light transmittance value ranging from about 0% to about 20% UV/visible light transmittance for UV/visible light wavelengths ranging from about 180 nm to about 800 nm when the co-curable UV/visible light-resistant layer comprises an average thickness ranging from about 2 mils to about 6 mils.

12. The method of Claim 10 or 11, wherein the co-curable UV/visible light-resistant layer is applied as a single ply to the co-curable composite material substrate; or
wherein the co-curable composite material substrate comprises a carbon fiber reinforced polymer composite material substrate; or
wherein the co-curable composite material substrate comprises a fiber reinforced epoxy resin matrix, said fiber reinforced epoxy resin matrix comprising at least one of carbon fibers, boron fibers, aramid fibers, fiberglass fibers, polyester fibers, and combinations thereof.

13. The method (300) of any one of Claims 10-12, further comprising:
providing (302) a second co-curable composite material substrate;
applying (304) a co-curable peel ply fiber-and-resin-containing layer positioned adjacent the co-curable second composite material substrate to form a co-curable composite material second precursor, said co-curable peel ply fiber-and-resin-containing layer, said co-curable UV/visible light-resistant layer comprising a further comprising a second co-curable UV/visible light-resistant resin compatible with the co-curable UV/visible light-resistant layer in the first co-curable composite material substrate in a co-cured state, said co-curable peel ply fiber-and-resin-containing layer further comprising a peel ply backing layer covering the co-curable peel ply fiber-and-resin-containing layer;
co-curing (306) the co-curable second composite material substrate with the co-curable peel ply fiber-and-resin-containing layer to form a co-cured composite material assembly second precursor.

14. The method (400) of Claim 13 further comprising:
removing (402) the peel ply backing layer from the co-cured composite material assembly first precursor to form a co-cured composite material assembly first precursor UV/visible light resistant resin layer exposed surface;
removing (404) the peel ply backing layer from the co-cured composite material assembly second precursor to form a co-cured composite material assembly second precursor UV/visible light resistant resin layer exposed surface;
applying (406) an adhesive layer to at least one of the co-cured composite material assembly first precursor UV/visible light resistant resin layer exposed surface and the co-cured composite material assembly second precursor UV/visible light resistant resin layer exposed surface; and
joining (408) the co-cured first composite material assembly precursor to the co-cured second composite material assembly precursor to form a composite material assembly.

15. The method of claim 14, further comprising forming a composite material (13) (180) assembly; and/or optionally
wherein the composite material assembly is a vehicle (10); and/or optionally
wherein the composite material assembly is an aircraft.
